Europäisches Patentamt

European Patent Office

Office européen des brevets

(11) Numéro de publication: **0 425 337 A1**

# DEMANDE DE BREVET EUROPEEN

(21) Numéro de dépôt: **90402849.5**

(51) Int. Cl.⁵: **G01L 1/22, G01L 25/00**

(22) Date de dépôt: **12.10.90**

(30) Priorité: **13.10.89 FR 8913388**

(43) Date de publication de la demande:
**02.05.91 Bulletin 91/18**

(84) Etats contractants désignés:
**DE ES FR GB IT**

(71) Demandeur: **Dal Dan, Félice**
**22 Avenue de la Belle Grabrielle**

**F-94130 Nogent-sur-Marne(FR)**

(72) Inventeur: **Dal Dan, Félice**
**22 Avenue de la Belle Grabrielle**
**F-94130 Nogent-sur-Marne(FR)**

(74) Mandataire: **Gayraud, René**
**6, rue du Val**
**F-78200 Mantes-la-Ville(FR)**

(54) **Dispositif permettant un étalonnage rapide des capteurs à jauges de contrainte et procédé d'utilisation.**

(57) Dispositif d'étalonnage rapide des capteurs à jauges de contrainte constitué d'une plaquette unique isolante (1) portant des résistances de pente (2) et des résistances de compensation de pont (6) avec des moyens de connexions (4-7)

Application à l'étalonnage des capteurs à jauges de contrainte.

# DISPOSITIF PERMETTANT UN ÉTALONNAGE RAPIDE DES CAPTEURS À JAUGES DE CONTRAINTE ET PROCÉDÉ D'UTILISATION.

La présente invention a pour objet la réalisation de capteurs à jauges de contrainte pouvant être étalonnées ou ajustées facilement lors de leurs réalisations et de ce fait d'un prix de revient très bas.

Les jauges de contrainte réalisées actuellement sont constituées d'un support en matériau isolant sur lequel sont disposées d'une manière parfaitement connue des jauges résistives reliées entre elles pour former un pont de mesure dit "pont de WHEATSTONE" délivrant un signal électrique proportionnel à la force ou couple à mesurer.

Ces jauges sont collées ensuite sur un corps d'épreuve dont on désire mesurer la force qui lui est appliquée.

Les jauges précitées sont réalisées en divers alliages et présentent de bonnes qualités piezo resistives.

Cependant divers facteurs perturbent la justesse des mesures effectuées. On s'est vite aperçu que le coefficient de déformation n'était pas le même pour le ou les résistances et le corps d'épreuve, par exemple, en fonction de la température cela entraînait des signaux erronés ; de même le corps d'épreuve sur lequel sont appliquées les jauges est réalisé en un alliage ayant un coefficient d'élasticité également différent avec la température entraînant aussi des signaux erronés.

Pour remédier à cette difficulté, on a adjoint aux jauges resistives une ou plusieurs résistances de réglage en cuivre ou en nickel.

En général des résistances dites "de pente" sont disposées en série sur les fils d'entrée du pont de WHEATSTONE. Ces résistances ne sont cependant jamais parfaitement linéaires et l'on doit les panacher pour corriger les variations qui sont dûes aux différents coefficients d'élasticité en fonction de la température.

De tels montages sont compliqués et conduisent à des coûts de fabrication élevés.

De plus, le pont de mesure n'est jamais parfaitement équilibré en fonction de la température . Afin de supprimer cette difficulté, on dispose un fil de cuivre en série sur une jauge, fil de cuivre que l'on sectionne "au jugé" afin de parfaire l'étalonnage et un second fil réputé stable en température, par exemple en "Constantan" sur une autre jauge afin de rééquilibrer le pont. Ce procédé nécessite un personnel très qualifié. La présente invention a pour objet de remédier à ces inconvénients, et de permettre un montage économique et rapide supprimant les manipulations hasardeuses.

Selon l'invention, les deux résistances de compensation du pont de mesure sont réalisées sur le même support. Ce support est constitué par une plaquette d'alumine (céramique) sur laquelle on sérigraphie les résistances en couche épaisse.

L'une des résistances est constituée avec du platine permettant une variation de pente parfaitement linéaire (ou en alliages présentant les mêmes qualités), déposé sur le support en une ligne sinueuse. Deux autres résistances sont déposées sur le support et ont la forme de lyre :

La première en ARGENT-PALLADIUM, la seconde en Platine. Des plots de connexion sont prévus de manière à pouvoir les relier à chaque sortie de jauge.

Lors de la réalisation d'un capteur à jauges de contrainte, on colle sur le corps d'épreuve simultanément ou séparément, les résistances formant le pont de "WHEATSTONE" et la plaquette portant les résistances d'ajustement que l'on connecte au pont de mesure par soudage. L'étalonnage étant parfaitement réalisé par simple grattage au moyen d'un outil abrasif ou par laser. Dans ce dernier cas, l'opération d'étalonnage peut être entièrement automatisée.

Il est évident que la présente invention apporte une solution élégante et économique à l'étalonnage d'un capteur à jauges de contrainte par l'adjonction d'une seule plaquette en céramique pouvant être collée sur le corps d'épreuve ou fixée par tout autre moyen et portant une résistance de pente et une ou plusieurs résistances de compensation de pont pouvant être connectées par soudage, d'une part, au pont de mesure et, d'autre part, à un dispositif de lecture évitant ainsi les inconvénients des montages actuels nécessitant plusieurs collages, des connexions difficiles à mettre en oeuvre et un ajustage final par la coupe d'un fil de cuivre. La plaquette portant les résistances en tôle émaillée, en verre ou en tout autre matière analogue. Elle peut être également autocollante ou fixée sur le corps d'épreuve au moyen d'un liant ayant des caractéristiques identiques.

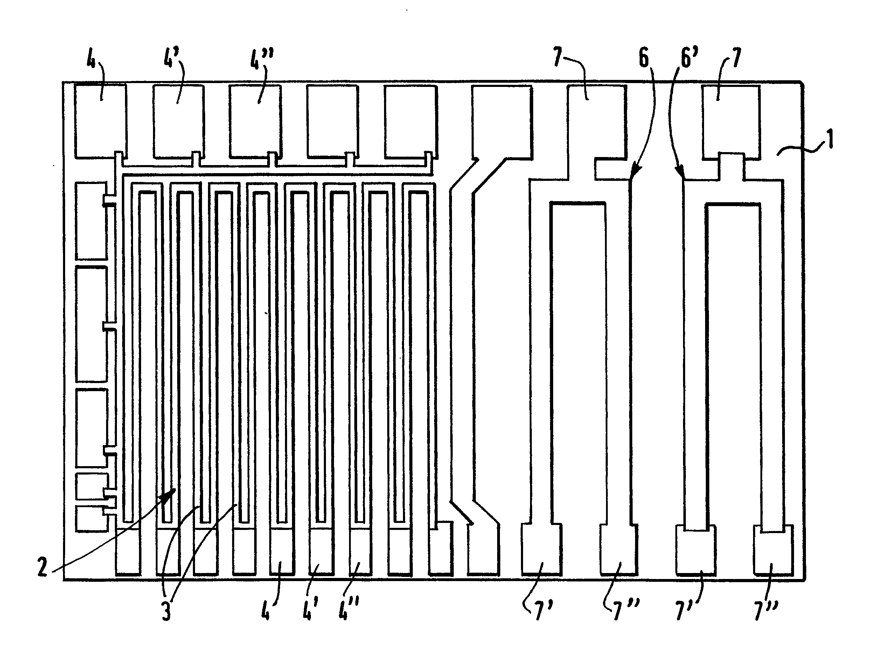

Une plaquette, selon l'invention est représentée sur le dessin annexe, à titre d'exemple de réalisation, sans que celle-ci soit limitative.

On voit en 1 une plaquette support rectangulaire en céramique, sur laquelle on a déposé par exemple, par sérigraphie en couche épaisse, du platine pour former la résistance 2. Cette résistance se présente sous forme d'une ligne brisée et dont chaque sommet est pourvu d'un plat de connexion 4,4',4" ... servant de plot de sortie ou d'entrée, afin d'obtenir finalement, une résistance de longueur et de valeur ohmique adéquates. Cette résistance dont le coefficient ohmique varie avec la température, sera connectée à l'entrée du pont de "WHEATSTONE".

A côté de cette résistance, on a déposé en couche épaisse et par sérigraphie du platine d'une part, et de l'Argent- Palladium d'autre part, pour former deux autres résistances 6 et $6^2$.

Ces résistances ont une forme en "lyre", dans l'exemple représenté, chaque branche des lyres ayant à leur extrémité un plot de connexion $7,7^l,7^{ll}$... Ces résistances dont l'une varie avec la température et l'autre pas, seront connectées à la sortie de chaque jauge. Pour parfaire l'ajustage, on grattera judicieusement l'une ou l'autre des résistances.

On peut également, selon l'invention , faire passer, pendant un temps très court, dans les résistances de pont, un courant électrique d'intensité suffisante pour provoquer leur chauffage et modifier ainsi leur resistivité.

L'avantage de l'invention résulte du fait que l'on peut déposer plusieurs alliages différents sur une même plaquette d'où sa simplicité de montage : Collage de la plaquette 1 sur le corps d'épreuve portant déjà le pont de mesure, ou mise en place simultanément avec le pont de mesure, connexion par point de soudure et étalonnage ultime par laser ou grattage. Cette plaquette peut également être montée sur des dispositifs portant déjà des capteurs à jauges de contrainte que l'on désire étalonner. Elle peut être fixée sur le corps d'épreuve par tout autre moyen, elle peut, par exemple être autocollante.

## Revendications

1. Dispositif permettant un étalonnage rapide des capteurs à jauges de contrainte et procédé d'utilisation caractérisé en ce qu'il est constitué d'une plaquette unique isolante (1) portant des résistances de pente (2) et des résistances de compensation de pont (6) en différents matériaux avec des moyens de connexion (47) des moyens ou procédés de fixation sur le corps d'épreuve et d'ajustement des résistances.

2. Dispositif permettant un étalonnage rapide des capteurs à jauges de contrainte selon 1 caractérisée en ce que la plaquette est réalisée en céramique.

3. Dispositif permettant un étalonnage rapide des capteurs à jauges de contrainte selon 1 caractérisé en ce que la plaquette est réalisée en tôle émaillée.

4. Dispositif permettant un étalonnage rapide des capteurs à jauges de contrainte selon 1 caractérisé en ce que la plaquette est réalisée en verre ou tout autre matériau analogue.

5. Dispositif permettant un étalonnage rapide des capteurs à jauges de contrainte selon 1 caractérisé en ce que les résistances de pente sont réalisées en platine ou alliage analogue déposé par sérigraphie en couche épaisse sur la plaquette support.

6. Dispositif permettant un étalonnage rapide des capteurs à jauges de contrainte selon 1 caractérisé en ce que les résistances de pont sont réalisées en PLATINE, et en ARGENT-PALLADIUM ou autre alliage identique, déposé par sérigraphie en couche épaisse sur la plaquette support.

7. Procédé permettant un étalonnage rapide des capteurs à jauges de contrainte selon 1 caractérisé en ce que la plaquette unique portant les résistances d'ajustement montée sur le corps d'épreuve est fixée par collage.

8. Procédé permettant un étalonnage rapide des capteurs à jauges de contrainte selon 1 caractérisé en ce que la plaquette unique portant les résistances d'ajustement est fixée sur le corps d'épreuve au moyen d'un liant présentant des caractéristiques identiques à celles desdits éléments solidarisés.

9. Procédé permettant un étalonnage rapide des jauges de contrainte selon 1 caractérisé en ce que la plaquette unique est autocollante.

10. Procédé permettant un étalonnage rapide des capteurs à jauges de contrainte selon 1 caractérisé en ce que l'on ajuste les résistances de pont au moyen d'un outil abrasif.

11. Procédé permettant un étalonnage rapide des jauges de contrainte selon 1 caractérisé en ce que les résistances de pont sont ajustées au moyen d'un faisceau laser.

12. Procédé permettant un étalonnage rapide des jauges de contrainte selon 1 caractérisé en ce que les résistances de pont sont ajustées par chauffage, au moyen d'un courant électrique d'intensité suffisante traversant lesdites résistances, de façon à modifier leur résistivité.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 211 144 (HOTTINGER BALDWIN MESSTECHNIK GMBH)<br>* revendications 1-4 * | 1 | G 01 L 1/22<br>G 01 L 25/00 |
| A | EP-A-0 229 553 (SEB S.A.)<br>* revendications 1,2 * | 1,7 | |
| A | DE-A-1 573 755 (PHILIPS PATENTVERWALTUNG GMBH)<br>* revendications 1,2 * | 1,4,7 | |
| A | DE-A-2 247 062 (KYOWA ELECTRONIC INSTRUMENTS CO., LTD.)<br>* revendications 1-3 * | 1,7 | |
| A | TM/TECHNISCHES MESSEN vol. 55, no. 6, 1988, pages 215-220, München, NFR; H. PAUL:<br>"Dünnfilm-DMS-Aufnehmer für kleine Kräfte und Massen"<br>* pages 217,218, passage 3 * | 1,11 | |

| DOMAINES TECHNIQUES RECHERCHES (Int. Cl.5) |
|---|
| G 01 L 1/22<br>G 01 L 25/00 |

Le présent rapport de recherche a été établi pour toutes les revendications

| Lieu de la recherche | Date d'achèvement de la recherche | Examinateur |
|---|---|---|
| Berlin | 18 janvier 91 | KOEHN G |